# EUROPÄISCHE PATENTSCHRIFT

(11) **EP 3 228 373 B1**
(45) Veröffentlichungstag und Bekanntmachung des Hinweises auf die Patenterteilung: **15.04.2020**
(21) Anmeldenummer: 17159507.7
(22) Anmeldetag: 07.03.2017
(51) Int. Cl.: B01D 17/02, E03F 5/16, C02F 1/40

(54) **EINRICHTUNG ZUM AUFFANGEN VON AUS EINEM TECHNISCHEN BETRIEBSMITTEL ODER EINER GERÄTSCHAFT AUSLAUFENDER LEICHTFLÜSSIGKEIT**
DEVICE FOR RECOVERING LIGHT LIQUID RUN-OFF FROM A TECHNICAL PIECE OF EQUIPMENT OR A DEVICE
DISPOSITIF DE COLLECTE DE LIQUIDE LÉGER S'ÉCOULANT D'UN OUTILLAGE OU D'UN ÉQUIPEMENT TECHNIQUE

(30) Priorität: 08.04.2016 DE 102016106500
(43) Veröffentlichungstag der Anmeldung: 11.10.2017
(73) Patentinhaber: Sell, Gerhard, 34233 Fuldatal-Thringshausen (DE)
(72) Erfinder: Sell, Gerhard, 34233 Fuldatal-Thringshausen (DE)
(74) Vertreter: Dantz, Jan Henning

(56) Entgegenhaltungen:
- EP-A1- 0 864 343
- CH-A- 148 050
- DE-A1- 3 309 640
- DE-C- 466 988
- DE-C- 526 362
- DE-U1- 9 313 924
- US-A- 1 671 115

## Beschreibung

Die vorliegende Erfindung betrifft eine Einrichtung zum Auffangen von aus einem technischen Betriebsmittel oder einer Gerätschaft auslaufender Leichtflüssigkeit, mit einer unter dem technischen Betriebsmittel oder der Gerätschaft angeordneten Auffangwanne zur Aufnahme von Leichtflüssigkeit und Niederschlagswasser, und einem in der Auffangwanne angeordneten Abscheider zum Zurückhalten ausgelaufener Leichtflüssigkeit, wobei der Abscheider einen Behälter mit einer Ablaufkammer aufweist, in dem eine Öffnung einer Überlaufleitung angeordnet ist, und der Behälter über einen Zulauf in Verbindung mit der Auffangwanne steht.

Die DE 93 13 924 U1 offenbart eine Transformatorenstation mit einem Auffangbecken für Kühlöl und Löschwasser, das über einen Ablauf mit einem Ölabscheider verbunden ist. An dem Abscheider ist eine Fühlsonde für aufgeschwommenes Kühlöl vorgesehen, und über einen Schnellschlussschieber kann die Ablaufleitung zu dem Ölabscheider verschlossen werden. Der Einbau eines Ölabscheiders getrennt von der Auffangwanne und der Einsatz eines Schnellschlussschiebers sowie der Fühlsonde ist vergleichsweise aufwändig, gerade wenn die Transformatorenstation über einen langen Zeitraum betrieben werden muss und die entsprechenden Gerätschaften regelmäßig gewartet werden müssen.

Die DE 100 24 180 B4 offenbart eine verbesserte Einrichtung zum Auffangen von Leichtflüssigkeiten, bei der ein Abscheider in der Auffangwanne angeordnet ist und eine Kammer enthält, die einen zu einer Abströmleitung führenden Überlauf aufweist. Dieser Abscheider nutzt das Schwerkraftprinzip, wobei das Volumen der Auffangwanne derart bemessen ist, dass auch die Menge an Leichtflüssigkeit aufgenommen werden kann, die maximal aus der Gerätschaft ausfließen kann. Aufgrund der starren Anordnung des Überlaufes und der festen Einbauhöhe des Zulaufes wird das Volumen der Auffangwanne nur teilweise genutzt. Zudem kann nach dem Einbau der Einrichtung die maximale Menge an aufzunehmender Leichtflüssigkeit nicht mehr vergrößert werden, und bei einer Überfüllung besteht die Gefahr, dass Leichtflüssigkeit in den Überlauf strömen könnte. Zusätzlich offenbaren CH148050, US1,671,115 und die DE3309640 weitere Vorrichtungen zum Abscheiden von Flüssigkeiten.

Es ist daher Aufgabe der vorliegenden Erfindung, eine Einrichtung zum Auffangen von aus einer Gerätschaft auslaufender Leichtflüssigkeit und Niederschlagswasser zu schaffen, die eine erhöhte Sicherheit gegen ein Austreten von Leichtflüssigkeit aus der Auffangwanne besitzt.

Diese Aufgabe wird mit einer Einrichtung zum Auffangen von aus einem technischen Betriebsmittel oder einer Gerätschaft auslaufenden Leichtflüssigkeit mit den Merkmalen des Anspruches 1 gelöst.

Bei der erfindungsgemäßen Einrichtung ist eine vorzugsweise in der Höhe variable Überlaufleitung in einer Ablaufkammer eines Behälters angeordnet, der sich innerhalb der Auffangwanne befindet. Zum Verschließen der Überlaufleitung ist ein selbsttätiges Verschlusselement vorgesehen, das bei einem Auslaufen von Leichtflüssigkeit in die Auffangwanne von einer Öffnungsposition in eine Schließposition bewegbar ist. Dadurch wird die Überlaufleitung verschlossen, wenn Leichtflüssigkeit in die Auffangwanne einläuft und die Gefahr besteht, dass diese Leichtflüssigkeit in den Überlauf gelangt. Dies erhöht die Sicherheit der Einrichtung, da einerseits über den Zulauf, die Ablaufkammer und die Überlaufleitung sichergestellt werden kann, dass zunächst ausschließlich das schwerere Wasser in den Überlauf gelangt. Zusätzlich kann über das Verschlusselement vorsorglich die Überlaufleitung verschlossen werden. Dies ermöglicht auch die Ausnutzung des Volumens der Auffangwanne im Havariefall. Gemäß einer bevorzugten Ausgestaltung ist das Verschlusselement mit mindestens einem Schwimmer verbunden, der außerhalb des Behälters in der Auffangwanne angeordnet ist. Der Schwimmer ist dabei so ausgebildet, dass er in Wasser schwimmt, also Auftriebskräfte erzeugt, während er in einer Leichtflüssigkeit, beispielsweise einem Öl, untergeht und keine Auftriebskräfte mehr erzeugt. Öl besitzt beispielsweise eine Rohdichte von 0,6 bis 0,9 g/cm³, während Wasser eine Dichte von 1 g/cm³ besitzt. Dieser Dichteunterschied wird genutzt, um mit dem Schwimmer über die Auftriebskräfte das Verschlusselement in einer Öffnungsposition zu halten, wenn er in Wasser schwimmt. Sollte Leichtflüssigkeit, insbesondere Öl, in die Auffangwanne einlaufen, schwimmt die Leichtflüssigkeit auf dem Wasser, und der Schwimmer ist zumindest teilweise von Öl umgeben, so dass geringere Auftriebskräfte erzeugt werden. Wenn die Flüssigkeitshöhe an Leichtflüssigkeit beispielsweise zwischen 1 cm bis 5 cm beträgt, kann der Schwimmer nicht mehr genug Auftriebskräfte erzeugen, so dass das mit dem Schwimmer verbundene Verschlusselement von einer Öffnungsposition in eine Schließposition abgesenkt wird. Dabei ist der Schwimmer vorzugsweise über mindestens ein Verbindungselement mit dem Verschlusselement gekoppelt, und der Schwimmer ist mit dem Verschlusselement in vertikale Richtung zusammen bewegbar.

Für eine exakte Einstellung der Öffnungsposition und der Schließposition kann der Schwimmer relativ zu dem Verschlusselement in der Höhe verstellbar gehalten sein. Hierfür können zwischen Schwimmer und Verschlusselement Gestänge mit einer Gewindeverstellung oder andere Verstellmechaniken eingesetzt werden.

Vorzugsweise ist der Schwimmer als Hohlkörper ausgebildet, insbesondere aus Metall. Dadurch kann der Schwimmer auch für einen langen Zeitraum innerhalb der Auffangwanne angeordnet werden, ohne dass die Funktionsfähigkeit der Einrichtung beeinträchtigt wird. Der Schwimmer kann dabei als Schwimmring um den Behälter angeordnet sein, so dass die Auftriebskräfte im Wesentlichen in vertikale Richtung wirken. Alternativ ist es möglich, den Schwimmer durch einen oder mehrere Schwimmbalken herzustellen, die das Verschlusselement ebenfalls in vertikale Richtung anheben und absenken können.

Um sicherzustellen, dass zu dem Überlaufrohr nur Wasser und keine Leichtflüssigkeit gelangt, umfasst der Zulauf vorzugsweise eine Zulaufleitung, deren Einströmöffnung im Bereich eines Bodens der Auffangwanne angeordnet ist. Dadurch wird die zu der Überlaufleitung geführte Flüssigkeit in einem unteren Bereich der Auffangwanne angesaugt. Vorzugsweise befindet sich die Einströmöffnung des Zulaufes dabei in einem Pumpensumpf, der in dem Boden der Auffangwanne eingelassen ist. Dadurch kann das Niveau der Einströmöffnung noch unterhalb eines Bodens der Auffangwanne angeordnet sein.

Um eine mehrstufige Filterung der in die Überlaufleitung einströmenden Flüssigkeit zu gewährleisten, umfasst der Zulauf ferner eine Verbindungsleitung zwischen der Ablaufkammer in dem Behälter und einer in der Auffangwanne angeordneten Zulaufkammer. In die Zulaufkammer kann dann die Flüssigkeit über die Zulaufleitung von der Auffangwanne einströmen. Mitgeführte Leichtflüssigkeit kann in der Zulaufkammer aufsteigen und verbleiben. Vorzugsweise ist in der Zulaufkammer ein Filter an der Verbindungsleitung vorgesehen, so dass eine weitere Reinigung in der Zulaufkammer erfolgt, bevor die Flüssigkeit dann in die Ablaufkammer mit der Überlaufleitung gelangt. Um sicherzustellen, dass das Verschlusselement nach dem Verschließen in einer geschlossenen Position bleibt, ist ein Verriegelungsmechanismus vorgesehen. Über den Verriegelungsmechanismus kann ein unbeabsichtigtes Öffnen des Verschlusselementes nach Erreichen der Schließposition verhindert werden.

Dabei weist der Verriegelungsmechanismus mindestens einen durch Schwerkraft verschwenkbaren Pendelarm auf, der an einer Kontaktfläche eines mit dem Schwimmer verbundenen Verbindungselementes anliegt. Es können dabei auch zwei in gegenläufige Richtungen verschwenkbare Pendelarme vorgesehen sein, die verhindern, dass der Schwimmer und das Verschlusselement wieder nach oben bewegt werden, wenn auf den Schwimmer Auftriebskräfte wirken.

Die Erfindung wird nachfolgend anhand eines Ausführungsbeispiels mit Bezug auf die beigefügten Zeichnungen näher erläutert. Es zeigen:
- Figur 1: eine Draufsicht auf eine erfindungsgemäße Einrichtung zum Auffangen von aus einer Gerätschaft auslaufender Leichtflüssigkeit und Wasser;
- Figur 2: eine Schnittansicht entlang der Linie A-A in Figur 1;
- Figur 3: eine Schnittansicht entlang der Linie B-B in Figur 1, und
- Figur 4: eine Detailansicht des Verriegelungsmechanismus für das Verschlusselement.

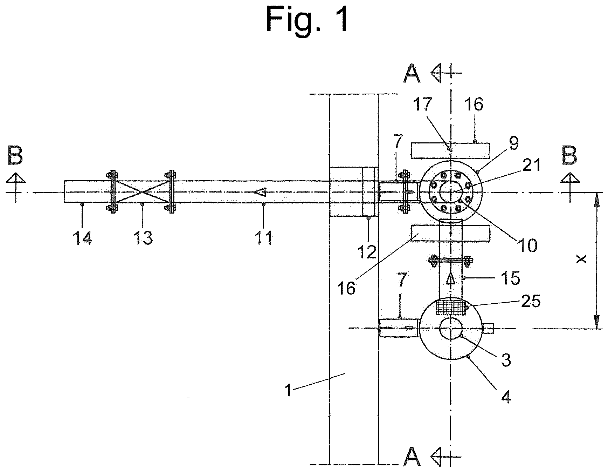

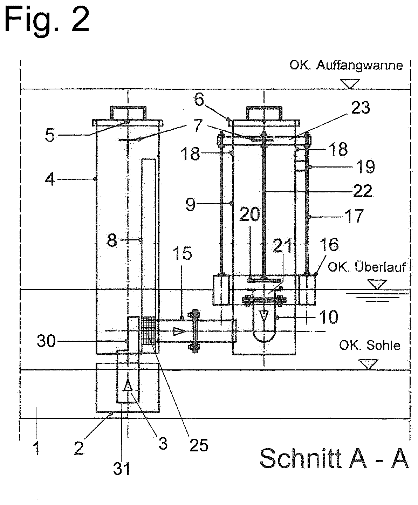

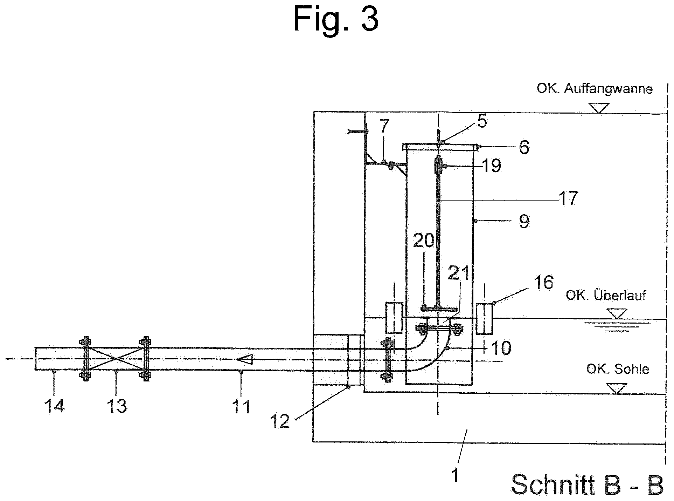

Die Einrichtung zum Auffangen von aus einer Gerätschaft auslaufenden Leichtflüssigkeit und Wasser umfasst eine Auffangwanne 1, die beispielsweise unterhalb von mit Öl gekühlten Transformatoren oder Erdschlussspulen einer Umspannanlage oder unterhalb von mit Öl gekühlten oder geschmierten Maschinen angeordnet ist, um im Falle eines Lecks Öl oder andere wassergefährdende Leichtflüssigkeiten aufnehmen zu können. Die Auffangwanne 1 ist in den Figuren 1 bis 3 nur schematisch dargestellt und umfasst einen Boden sowie Seitenwände, wobei in den Boden ein Pumpensumpf 2 eingelassen ist, in dem eine Einströmöffnung 31 einer Zulaufleitung 3 angeordnet ist. Dadurch ist sichergestellt, dass an einer tiefen Stelle der Auffangwanne 1 Flüssigkeit in die Zulaufleitung 3 gelangt. Die Zulaufleitung 3 leitet die Flüssigkeit von dem Pumpensumpf 2 in eine Zulaufkammer 4, die sich innerhalb eines Zulaufbehälters in der Auffangwanne 1 befindet. Die Zulaufleitung 3 ist dabei innerhalb der Zulaufkammer 4 mit einer Ausklinkung 30 versehen, wobei hinter der Wand an der Ausklinkung 30 ein Filter 25 angeordnet ist, der zu einer Verbindungsleitung 15 führt. Dadurch wird ein direktes Einströmen von Flüssigkeit aus der Zulaufleitung 3 in die Verbindungsleitung 15 verhindert, da die Flüssigkeit erst um den Wandabschnitt herumströmen muss. Der Filter 25 ist dabei an einem Führungsrohr 8 oder einem Halter innerhalb der Zulaufkammer 4 angeordnet. Die Zulaufkammer 4 ist an der Oberseite über eine abnehmbare Abdeckung 5 verschlossen, um das Eindringen von Regenwasser bzw. im Leckage Fall von Leichtflüssigkeit zu vermeiden. Der Behälter mit der Zulaufkammer 4 ist ferner über eine Wandhalterung 7 an einer Seitenwand der Auffangwanne 1 fixiert.

Die Verbindungsleitung 15 leitet die Flüssigkeit von der Zulaufkammer 4 zu einem Behälter 9 mit einer Ablaufkammer. Die Verbindungsleitung 15 mündet dabei in einem unteren Bereich der Ablaufkammer. In der Ablaufkammer ist eine in der Höhe variabel positionierbare Überlaufleitung 10 angeordnet, die eine Öffnung 21 besitzt, die über ein Verschlusselement 20 verschließbar ist. Die Öffnung 21 ist nach oben hin geöffnet, und durch Absenken des Verschlusselementes 20 kann die Öffnung 21 der Überlaufleitung 10 verschlossen werden. Hierfür sind entsprechende Dichtmittel an dem Verschlusselement 20 und/oder der Öffnung 21 vorgesehen.

Das Verschlusselement 20 ist an einem Halter 22 hängend angeordnet, der über ein Verbindungselement 23 mit zwei Gewindestangen 17 verbunden ist, die sich außerhalb des Behälters 9 befinden. Die Gewindestangen 17 sind an einer oder mehreren Führungshülsen 19 in vertikale Richtung geführt. An den Gewindestangen 17 sind im unteren Bereich Schwimmer 16 angeordnet, die in dem dargestellten Ausführungsbeispiel als zwei Schwimmbalken ausgebildet sind.

Die Schwimmer sind als Hohlkörper ausgebildet, insbesondere aus Metall, und schwimmen auf einer Flüssigkeit in der Auffangwanne 1 und erzeugen somit Auftrieb, um das Verschlusselement 20 in einer angehobenen Öffnungsposition zu halten. Statt den zwei Schwimmbalken kann der Schwimmer 16 auch aus einem Schwimmring gebildet sein, der ringförmig um den im Wesentlichen zylindrischen Behälter 9 angeordnet ist. Zudem kann der Schwimmer 16 statt aus einem Hohlkörper aus Metall auch aus anderen Materialien hergestellt sein.

Im Normalbetrieb befindet sich das Verschlusselement 20 in einer Öffnungsposition. Wenn in die Auffangwanne 1 Wasser einströmt, beispielsweise Niederschlagswasser, steigt der Flüssigkeitsspiegel in der Auffangwanne 1 an und drückt somit das Wasser über den Pumpensumpf 2 und die Zulaufleitung 3 in die Zulaufkammer 4. Von der Zulaufkammer 4 strömt die Flüssigkeit durch den Filter 25 in die Verbindungsleitung 15 und in einen unteren Bereich des Behälters 9 mit der Ablaufkammer. Über die Positionierung der Öffnung 21 der Überlaufleitung 10 ist der maximale Füllstand in der Auffangwanne 1 bei geöffnetem Verschlusselement 20 vorgegeben. Der skizzierte Strömungsweg gilt nur für Wasser, da leichtere Flüssigkeiten, wie Öl, in der Auffangwanne 1 oder gegebenenfalls auch in der Zulaufkammer 4 an der Oberfläche schwimmen würden. Das so gesammelte Wasser kann dann über die Überlaufleitung 10 zu einem Ablaufrohr 11 geleitet werden, das durch eine Öffnung 12 in einer Seitenwand der Auffangwanne 1 abgedichtet geführt ist. Das Ablaufrohr 11 kann über einen Schieber 13, beispielsweise einen Keilovalschieber, zu einem weiteren Ablaufrohr 14 geführt sein, um das Ablaufrohr 11 bei Bedarf verschließen zu können.

Zwischen den beiden Flanschen der Verbindungsleitung 15 ist ein Blech mit definierten Bohrungen geklemmt. Über die Anzahl und den Durchmesser der Bohrungen wird die Durchflussmenge der Flüssigkeit eingestellt.

Falls nun statt Niederschlagswasser Leichtflüssigkeit, wie Öl oder Benzin, in die Auffangwanne einströmt, sammelt sich diese Leichtflüssigkeit an einer Oberfläche der in der Auffangwanne 1 befindlichen Flüssigkeit, da diese leichter ist als Wasser. Der Schwimmer 16, der bislang nur von Wasser umgeben war, wird dadurch zumindest teilweise von der Leichtflüssigkeit umgeben, da das schwerere Wasser über die Überlaufleitung 10 abfließt. Dadurch bleibt der Flüssigkeitspegel in der Auffangwanne im Wesentlichen konstant, der Schwimmer 16 ist allerdings zumindest von Leichtflüssigkeit statt von Wasser umgeben, so dass geringere Auftriebskräfte erzeugt werden. Über die Verbindung der Schwimmer 16 und über die Gewindestangen 17, das Verbindungselement 23 und den Halter 22 werden Schwimmer 16 und das Verschlusselement 20 zusammen in vertikale Richtung bewegt, so dass bei einem Absinken der Schwimmer 16 das Verschlusselement 20 auf die Öffnung 21 der Überlaufleitung absenkt und diese verschließt.

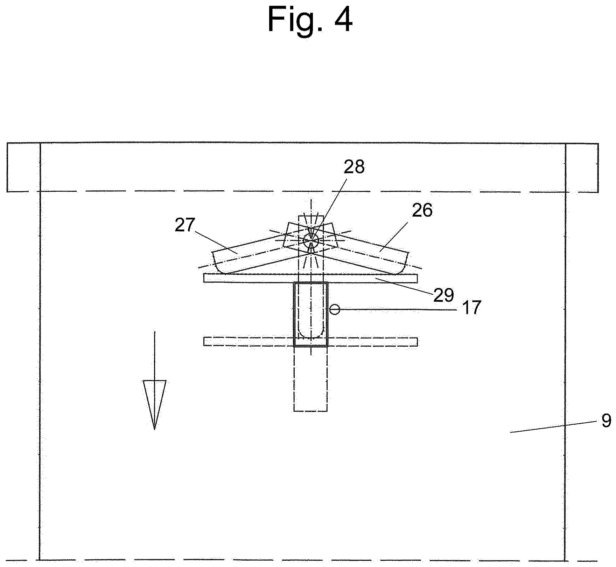

Wenn das Verschlusselement 20 in die Schließposition auf die Öffnung 21 bewegt wurde, ist ein Verriegelungsmechanismus vorzusehen, um das Verschlusselement 20 in der Verriegelungsposition zu halten, selbst wenn wieder Auftriebskräfte auf den Schwimmer 16 wirken. Dieser Verriegelungsmechanismus ist in Figur 4 dargestellt. An dem Behälter 9 befinden sich zwei schwenkbare gelagerte Pendelarme 26 und 27, die um eine außermittig angeordnete Achse 28 drehbar gelagert sind. Der längere und schwerere Teil der Pendelarme 26 und 27 liegt auf einer Kontaktfläche 29 auf, die mit dem Verbindungselement 23 und diese wiederum mit den Gewindestangen 17 in Verbindung steht. Wird die Kontaktfläche 29 abgesenkt, schwenken die Pendelarme 26 und 27 aufgrund der Schwerkraft nach unten, wobei nach einer vertikalen Ausrichtung der Pendelarme 26 und 27 ein erneutes Anheben der Kontaktfläche 29 und der Gewindestangen 17 verhindert wird. Kleinere Pendelbewegungen der Pendelarme 26 und 27 können hingegen keine Verriegelung bewirken.

Um die Schließposition des Verschlusselementes 20 und die Öffnungsposition einzustellen, ist das Verschlusselement 20 vorzugsweise relativ zu dem Schwimmer 16 in der Höhe verstellbar. Hierfür kann ein entsprechender Verstellmechanismus für eine Höhenverstellung, beispielsweise an der Gewindestange 17, vorgesehen sein.

### Bezugszeichenliste

- 1: Einströmöffnung
- 2: Pumpensumpf
- 3: Zulaufleitung
- 4: Zulaufkammer
- 5: Abdeckung
- 7: Wandhalterung
- 8: Führungsrohr
- 9: Behälter
- 10: Überlaufleitung
- 11: Ablaufrohr
- 12: Öffnung
- 13: Schieber
- 14: Ablaufrohr
- 15: Verbindungsleitung
- 16: Schwimmer
- 17: Gewindestange
- 19: Führungshülse
- 20: Verschlusselement
- 21: Öffnung
- 22: Halter
- 23: Verbindungselement
- 25: Filter
- 26: Pendelarm
- 27: Pendelarm
- 28: Achse
- 29: Kontaktfläche
- 30: Ausklinkung
- 31: Einströmöffnung

## Patentansprüche

1. Einrichtung zum Auffangen von aus einem technischen Betriebsmittel oder einer Gerätschaft auslaufender Leichtflüssigkeit, mit einer unter dem technischen Betriebsmittel oder der Gerätschaft angeordneten Auffangwanne (1) zur Aufnahme von Leichtflüssigkeit und Niederschlagswasser, und einem in der Auffangwanne (1) angeordneten Abscheider zum Zurückhalten ausgelaufener Leichtflüssigkeit, wobei der Abscheider einen Behälter (9) mit einer Ablaufkammer aufweist, in dem eine Öffnung (21) einer Überlaufleitung (10) angeordnet ist, und der Behälter (9) über einen Zulauf in Verbindung mit der Auffangwanne (1) steht, wobei der Zulauf eine Zulaufleitung (3) umfasst, deren Einströmöffnung (31) im Bereich eines Bodens der Auffangwanne (1) angeordnet ist, wobei ein selbsttätiges Verschlusselement (20) zum Verschließen der Überlaufleitung (10) vorgesehen ist, das bei einem Auslaufen von Leichtflüssigkeit in die Auffangwanne (1) von einer Öffnungsposition in eine Schließposition bewegbar ist, und wobei das Verschlusselement (20) mit mindestens einem Schwimmer (16) verbunden ist, der außerhalb des Behälters (9) in der Auffangwanne angeordnet ist, **dadurch gekennzeichnet, dass** ein Verriegelungsmechanismus vorgesehen ist, mittels dem das Verschlusselement (20) in der die Überlaufleitung (10) verschließenden Position verriegelbar ist, wenn das Verschlusselement (20) von der Öffnungsposition in die Schließposition bewegt wurde und der Verriegelungsmechanismus mindestens einen durch Schwerkraft verschwenkbaren Pendelarm (26, 27) aufweist, der an einer Kontaktfläche eines mit dem Schwimmer (16) verbundenen Verbindungselementes anliegt.

2. Einrichtung nach Anspruch 1, **dadurch gekennzeichnet, dass** der Schwimmer (16) über mindestens ein Verbindungselement mit dem Verschlusselement (20) gekoppelt ist und der Schwimmer (16) und das Verschlusselement (20) in vertikale Richtung zusammen bewegbar sind.

3. Einrichtung nach Anspruch 2, **dadurch gekennzeichnet, dass** der Schwimmer (16) relativ zu dem Verschlusselement (20) in der Höhe verstellbar gehalten ist.

4. Einrichtung nach einem der Ansprüche 1 bis 3, **dadurch gekennzeichnet, dass** der Schwimmer (16) als Hohlkörper ausgebildet ist, insbesondere aus Metall.

5. Einrichtung nach einem der Ansprüche 1 bis 4, **dadurch gekennzeichnet, dass** der Schwimmer (16) als Schwimmring um den Behälter (9) oder als mindestens ein Schwimmbalken ausgebildet ist.

6. Einrichtung nach einem der vorhergehenden Ansprüche, **dadurch gekennzeichnet, dass** die Einströmöffnung (31) in einem Pumpensumpf (2) angeordnet ist, der in dem Boden der Auffangwanne (1) eingelassen ist.

7. Einrichtung nach einem der vorhergehenden Ansprüche, **dadurch gekennzeichnet, dass** der Zulauf eine Verbindungsleitung (15) zwischen der Ablaufkammer in dem Behälter (9) und einer in der Auffangwanne (1) angeordneten Zulaufkammer (4) aufweist.

8. Einrichtung nach Anspruch 7, **dadurch gekennzeichnet, dass** an der Zulaufkammer (4) ein Filter (25) an der Verbindungsleitung (15) vorgesehen ist.

9. Einrichtung nach Anspruch 1, **dadurch gekennzeichnet, dass** zwei in gegenläufige Richtungen verschwenkbare Pendelarme (26, 27) zur Verriegelung vorgesehen sind.

## Claims

1. Device for recovering light liquid leaking from a technical piece of equipment or a device, having a collecting trough (1) arranged under the technical piece of equipment or the device for receiving light liquid and precipitation water, and a separator arranged in the collecting trough (1) for retaining leaked light liquid, wherein the separator has a container (9) with an outlet chamber, in which an opening (21) of an overflow line (10) is arranged, and the container (9) is connected via an inlet to the collecting trough (1), wherein the inlet comprises an inlet line (3) whose inflow opening (31) is arranged in the region of a base of the collecting trough (1), wherein an automatic closure element (20) is provided for closing the overflow line (10), which can be moved from an opening position into a closing position when light liquid leaks into the collecting trough (1), and wherein the closure element (20) is connected to at least one float (16) which is arranged outside the container (9) in the collecting trough, **characterized in that** a locking mechanism is provided, by means of which the closure element (20) can be locked in the position closing the overflow line (10) when the closure element (20) has been moved from the opening position into the closing position and the locking mechanism has at least one pendulum arm (26, 27) which can be pivoted by gravity and which rests against a contact surface of a connecting element connected to the float (16).

2. Device according to claim 1, **characterized in that** the float (16) is coupled to the closure element (20) via at least one connecting element, and the float (16) and the closure element (20) can be moved together in the vertical direction.

3. Device according to claim 2, **characterized in that** the float (16) is held adjustably in height relative to the closure element (20).

4. Device according to one of claims 1 to 3, **characterized in that** the float (16) is constructed as a hollow body, in particular made of metal.

5. Device according to one of claims 1 to 4, **characterized in that** the float (16) is designed as a floating ring around the container (9) or as at least one floating beam.

6. Device according to one of the preceding claims, **characterized in that** the inflow opening (31) is arranged in a pump sump (2) which is embedded in the base of the collecting trough (1).

7. Device according to one of the preceding claims, **characterized in that** the inlet comprises a connecting line (15) between the outlet chamber in the container (9) and an inlet chamber (4) arranged in the collecting trough (1).

8. Device according to claim 7, **characterized in that** a filter (25) is provided on the connecting line (15) at the inlet chamber (4).

9. Device according to claim 1, **characterized in that** two pendulum arms (26, 27) which are pivotable in opposite directions are provided for locking.

## Revendications

1. Dispositif pour recueillir un liquide léger s'écoulant d'un équipement d'exploitation technique ou d'un appareillage, avec un bac collecteur (1) disposé sous l'équipement technique d'exploitation ou l'appareillage afin de recevoir du liquide léger et de l'eau de précipitations, et avec un séparateur disposé dans le bac collecteur (1) pour retenir le liquide léger écoulé, lequel séparateur comporte un réservoir (9) avec un compartiment d'écoulement dans lequel est disposée une ouverture (21) d'une conduite de trop-plein (10) et le réservoir (9) communique par une arrivée avec le bac collecteur (1), laquelle arrivée comprend une conduite d'arrivée (3) dont l'ouverture d'entrée (31) est disposée au niveau d'un fond du bac collecteur (1), un élément d'obturation automatique (20) capable de se déplacer d'une position d'ouverture à une position de fermeture lors d'un écoulement de liquide léger dans le bac collecteur (1) étant prévu pour fermer la conduite de trop-plein (10) et l'élément d'obturation (20) étant relié à au moins un flotteur (16) disposé à l'extérieur du réservoir (9) dans le bac collecteur, **caractérisé en ce qu'**il est prévu un mécanisme de verrouillage au moyen duquel l'élément d'obturation (20) peut être verrouillé dans la position où il ferme la conduite de trop-plein (10) après que l'élément d'obturation (20) a été déplacé de la position d'ouverture à la position de fermeture et le mécanisme de verrouillage comporte au moins un bras oscillant (26, 27) qui peut osciller sous l'effet de la gravité et qui repose sur une surface de contact d'un élément de liaison relié au flotteur (16).

2. Dispositif selon la revendication 1, **caractérisé en ce que** le flotteur (16) est couplé à l'élément d'obturation (20) par au moins un élément de liaison et le flotteur (16) et l'élément d'obturation (20) peuvent être déplacés ensemble dans le sens vertical.

3. Dispositif selon la revendication 2, **caractérisé en ce que** le flotteur (16) est maintenu avec possibilité d'ajustement en hauteur par rapport à l'élément d'obturation (20).

4. Dispositif selon l'une des revendications 1 à 3, **caractérisé en ce que** le flotteur (16) est conformé comme un corps creux, en particulier en métal.

5. Dispositif selon l'une des revendications 1 à 4, **caractérisé en ce que** le flotteur (16) est conformé comme un flotteur annulaire entourant le réservoir (9) ou comme au moins un flotteur en forme de barre.

6. Dispositif selon l'une quelconque des revendications précédentes, **caractérisé en ce que** l'ouverture d'entrée (31) est disposé dans un carter de pompe (2) formé dans le fond du bac collecteur (1).

7. Dispositif selon l'une quelconque des revendications précédentes, **caractérisé en ce que** l'arrivée comporte une conduite de communication (15) entre le compartiment d'écoulement dans le réservoir (9) et un compartiment d'arrivée (4) disposé dans le bac collecteur (1).

8. Dispositif selon la revendication 7, **caractérisé en ce qu'**un filtre est prévu sur la conduite de communication (15) dans le compartiment d'arrivée (4).

9. Dispositif selon la revendication 1, **caractérisé en ce que** deux bras oscillants (26, 27) pouvant osciller dans des directions opposées sont prévus pour le verrouillage.
